# FASCICULE DE BREVET EUROPEEN

(11) **EP 0 872 796 B1**
(45) Date de publication et mention de la délivrance du brevet: **24.03.2004**
(21) Numéro de dépôt: 98400941.5
(22) Date de dépôt: 16.04.1998
(51) Int. Cl.: G06F 9/46

(54) **Procédé de gestion d'une mémoire partagée**
Verfahren zum Verwalten eines geteilten Speichers
Method for managing a shared memory

(30) Priorité: 17.04.1997 FR 9704744
(43) Date de publication de la demande: 21.10.1998
(73) Titulaire: ALCATEL, 75008 Paris (FR)
(72) Inventeur: Jouenne, Franck, 94420 Le Plessis Trevise (FR); Guidot, Dominique, 92310 Sevres (FR); Paul Dubois Taine, Benoît, 92340 Bourg La Reine (FR)
(74) Mandataire: Sciaux, Edmond

(56) Documents cités:
- EP-A- 0 713 179
- C.J. DATE: "An Introduction to Database Systems" juillet 1985 , ADDISON-WESLEY PUBLISHING COMPANY , READING, MA, US XP002051552 page 83 - page 142 * page 85, ligne 21 - page 87, dernière ligne * * page 96, ligne 1 - page 106, dernière ligne * * page 110, ligne 18 - page 119, ligne 22 *
- GRAY J N ET AL: "Granularity of locks and degrees of consistency in a shared data base" PROCEEDINGS OF THE IFIP WORKING CONFERENCE ON MODELLING IN DATA BASE MANAGEMENT SYSTEMS, FREUDENSTADT, WEST GERMANY, 5-8 JAN. 1976, pages 365-394, XP002051551 ISBN 0-7204-0459-2, 1976, AMSTERDAM, NETHERLANDS, NORTH-HOLLAND, NETHERLANDS

## Description

L'invention concerne un procédé de gestion des données dans une mémoire partagée, cette mémoire étant la mémoire centrale d'un ordinateur dans lequel sont exécutés simultanément plusieurs processus. Chaque processus est lui-même généralement constitué de plusieurs tâches élémentaires qui peuvent être en concurrence pour accéder à des données pour les lire et pour les modifier. Un tel procédé de gestion est mis en oeuvre par un logiciel appelé **gestionnaire de données**. Dans un ordinateur, on distingue la mémoire centrale qui a une capacité limitée mais où tous les emplacements sont accessibles directement, donc de manière très rapide, et une **mémoire de masse** constituée généralement d'un disque dur, ayant une capacité beaucoup plus importante mais un accès beaucoup moins rapide puisqu'il faut sélectionner une piste puis attendre que l'emplacement recherché sur une piste se présente en face d'une tête de lecture. Classiquement, le système d'exploitation de l'ordinateur ne charge dans la mémoire centrale que les données qui sont effectivement nécessaires à un instant donné, et le chargement est réalisé par l'intermédiaire d'une petite mémoire rapide et spécialisée, qui est appelée mémoire cache et qui procure une accélération apparente de l'accès au disque dur, par un mécanisme d'anticipation qui exploite le fait que les données sont généralement utilisées séquentiellement par les applications. Les gestionnaires de données classiques ont donc été optimisés en tenant compte du fait que les données transitent par une mémoire cache.

Les progrès de la technologie des mémoires à semi-conducteur permettent maintenant de réaliser une mémoire centrale ayant une capacité suffisante pour charger en mémoire centrale l'ensemble des données partagées par tous les processus exécutés dans un ordinateur, même pour des applications manipulant de gros volumes de données. Le disque dur n'a alors que le rôle de sauvegarde des données, en conservant une réplique mise à jour de toutes les données qui sont en mémoire centrale. Le chargement de toutes les données en mémoire centrale est particulièrement avantageux pour les applications qui n'exploitent pas les données séquentiellement, une mémoire cache n'apportant que peu de bénéfice à ces applications. C'est le cas, en particulier, des applications commandant les autocommutateurs de télécommunication. Il faut donc concevoir des gestionnaires de données qui soient optimisés pour gérer des données entièrement chargées dans une mémoire centrale.

On connaît des gestionnaires de données utilisés dans des bases de données **orientées objets,** et des gestionnaires de données utilisés dans des bases de données **relationnelles**.

Il y a deux types d'accès à une donnée : accès en lecture ou accès en écriture. Pour chaque type d'accès, on connaît deux modes de transfert d'informations entre le gestionnaire de données et une tâche élémentaire : un mode de transfert **par valeur**, et un mode de transfert **par pointeur**.

Pour un accès en lecture (respectivement en écriture) à la valeur d'une variable, le mode de transfert par **valeur** consiste à lire (respectivement écrire) une valeur de la variable dans l'emplacement mémoire qui contient la valeur courante de la variable ; alors que le mode de transfert par **pointeur** consiste à fournir, à la tâche qui a demandé la lecture (respectivement l'écriture), une adresse, appelée pointeur, qui désigne l'emplacement mémoire où est située la valeur à lire (respectivement l'emplacement où sera écrite une valeur), la tâche étant libre ensuite de lire (respectivement écrire) dans cet emplacement pendant tout le temps où elle possède ce pointeur. Lorsqu'une tâche accède à une variable, dans le mode par pointeur, il est connu d'attribuer un verrou appelé "hold" à l'emplacement mémoire qui contient la valeur courante de cette variable, pour cette tâche, afin de maintenir la consistance des données vues par chaque tâche. Ce hold est un droit d'accès exclusif à la valeur courante de cette variable, tant que ce hold n'est pas relâché.

Le mode de transfert **par pointeur** est connu dans des gestionnaires de données orientés objets. Il a l'avantage de permettre des accès rapides. Il permet de manipuler une donnée comme une variable d'un langage de programmation. Mais les gestionnaires de données objets ont pour inconvénient : soit de ne pas offrir de transactions multitâches (Par conséquent il n'y a pas de concurrence), soit de ne pas offrir de verrouillage au niveau d'un objet (Toute concurrence entraîne le verrouillage d'une page et entraîne la copie complète de cette page dans un journal. Ce niveau de granularité entraîne donc un surcoût).

Le mode de transfert **par valeur** est utilisable sans gérer une concurrence d'accès. La gestion de la concurrence des accès est gérée par un protocole dit **transactionnel** qui est appliqué par le gestionnaire de données, de la base.

Un ensemble d'opérations de lecture et/ou d'opérations d'écriture, portant sur plusieurs variables; demandées par une tâche dans une même requête, est appelé transaction. Dans une transaction chaque opération peut être réalisée soit avec le mode de transfert par valeur, soit avec le mode de transfert par pointeur. Toute transaction se décompose en trois phases :
- Une phase d'ouverture, pendant laquelle le gestionnaire de données fournit un identificateur de transaction, unique, à la tâche qui a ouvert la transaction, cet identificateur désignant un emplacement mémoire contenant un descripteur de la transaction ;
- Une phase d'accès, pendant laquelle des opérations de lecture ou d'écriture sont exécutées par la tâche ayant ouvert la transaction, mais restent invisibles pour les utilisateurs autres que cette transaction ; et pendant laquelle des droits appelés verrous de lecture et verrous d'écriture sont attribués à cette transaction, pour l'emplacement mémoire concerné. Selon l'un des procédés d'accès connus, lorsqu'une transaction réalise un accès en écriture, elle inscrit provisoirement la nouvelle valeur de la variable dans un emplacement mémoire appelé journal et qui est attribué à cette transaction pour cette variable. Ce journal n'est accessible que par cette transaction.
- Une phase de fermeture, ou validation, pendant laquelle les écritures et les lectures sont validées. Selon le procédé connu évoqué ci-dessus, les nouvelles valeurs (qui sont contenues dans les journaux attribués à cette transaction) sont inscrites dans les emplacements contenant respectivement les valeurs courantes, et elles deviennent visibles par toutes les tâches. Les valeurs à lire sont effectivement lues.
Un **verrou** peut être attribué à l'emplacement mémoire contenant la valeur courante ou la nouvelle valeur d'une variable pour interdire d'autres opérations qui compromettraient la consistance des données. Un verrou peut être attribué à l'ensemble d'une table de données. On distingue deux types de verrou :
- Un verrou de lecture, attribué à une transaction donnée, pour un emplacement mémoire donné, est un droit non exclusif attribué à cette transaction, autorisant cette transaction à lire la valeur mémorisée dans cet emplacement mémoire et interdisant de valider toute autre transaction qui veut écrire dans cet emplacement mémoire.
- Un verrou d'écriture, attribué à une transaction donnée pour un emplacement mémoire donné, est un droit exclusif attribué à cette transaction, autorisant cette transaction, et elle seule, à écrire une valeur dans cet emplacement mémoire.
Dans certains systèmes, une **priorité** peut être attribuée à une variable pour favoriser un type d'opération (lecture ou écriture) par rapport à l'autre type, lorsque deux transactions sont concurrentes pour réaliser deux opérations différentes sur cette variable. La transaction qui demande l'opération la plus prioritaire est dite transaction **prioritaire** pour cette variable.
Un verrou de lecture ou d'écriture peut être soit avortable, soit non avortable :
- S'il est **avortable**, il est relâché lorsqu'une transaction, concurrente de la transaction possédant ce verrou avortable, est prioritaire par rapport à celle-ci. La transaction possédant ce verrou est alors avortée.
- S'il est **non avortable**, il n'est pas relâché lorsqu'une transaction, concurrente de la transaction possédant ce verrou avortable, est prioritaire par rapport à celle-ci. La transaction possédant ce verrou n'est pas avortée.
Un verrou avortable passe à l'état non avortable lorsque la transaction qui le possède est validée. Simultanément, les verrous avortables des transactions concurrentes sont relâchés, et ces transactions concurrentes sont avortées.

Certains protocoles transactionnels permettent d'effectuer une transaction en garantissant quatre propriétés appelées **ACID** :
- **l'atomicité** (l'ensemble des accès demandés par une transaction sont traités ou aucun) ;
- la **consistance** (L'ensemble des données passe d'un état stable à un autre état stable) ;
- l'**isolation** (les nouvelles valeurs des variables ne sont pas visibles à l'extérieur de la transaction, avant que celle-ci soit fermée) ;
- la **durabilité** (Dés qu'une transaction est validée, les nouvelles valeurs des variables résistent aux défaillances de la station sur laquelle elles sont mémorisées ; ces valeurs étant sauvegardées sur un disque ou sur une autre station en état de fonctionner) ;
- la **sérialisation** (si plusieurs transactions se déroulent en parallèle, leur résultat est le même que si elles se déroulaient successivement).

La demande brevet **FR 2 727 222** décrit un tel protocole transactionnel. Les gestionnaires de données connus garantissent les propriétés ACID mais ils ont l'inconvénient de ne pas offrir l'accès par pointeur. L'Art antérieur n'offre donc aucun procédé qui soit complètement satisfaisant.

Le but de l'invention est de proposer un procédé de gestion des données dans une mémoire partagée, qui procure, en moyenne, une grande rapidité d'accès aux données, en offrant l'accès par pointeur ; et qui garantisse néanmoins les propriétés ACID, lors d'une transaction.

L'objet de l'invention est un procédé de gestion de données dans une mémoire partagée, des données contenues dans cette mémoire étant partagées par différents processus concurrents, chaque processus étant généralement constitué de plusieurs tâches concurrentes ; **caractérisé** en ce que,
- **hors d'une transaction,**
   - une opération de lecture consiste, pour chaque variable à lire, à : attribuer un verrou appelé hold à la variable à lire, ce hold interdisant tout accès à la dite variable, s'il n'y a pas déjà un hold attribué à la dite variable ; ou attribuer un nouveau hold à la dite variable, après avoir attendu le relâchement du précédent hold, si un précédent hold avait été attribué à la dite variable ;
      et consiste soit à fournir un pointeur, désignant une zone de la mémoire contenant la valeur courante de la dite variable, au processus qui a demandé la dite opération de lecture ; soit à fournir la valeur courante de la variable et à la copier, de manière atomique, dans un emplacement mémoire qui appartient à la tâche ayant demandé la dite opération de lecture ; et ensuite relâcher le hold ;
   - une opération **d'écriture** consiste, pour chaque variable à écrire, à :
      -- s'il y a un hold attribué à la valeur courante de la variable, attendre ) le relâchement du hold ;
      -- s'il n'y a pas, ou plus, de hold attribué à la variable, attribuer un hold à la variable pour la durée nécessaire à l'écriture de la variable, et :
         --- s'il y a un verrou d'écriture, relâcher le hold, attendre le relâchement du verrou d'écriture, et ensuite attribuer un nouveau hold à la variable ;
         --- s'il n'y a pas, ou plus de verrou en écriture, et :
            ---- s'il y a un verrou en lecture, attendre son relâchement si la tâche qui a demandé ladite opération de lecture a une priorité vis-à-vis de toute tâche écrivain, ou bien relâcher le verrou de lecture et avorter la transaction auquel il appartient dans le cas contraire ;
            ---- s'il n'y a pas, ou plus, de verrou en lecture, attribuer un verrou en écriture non avortable interdisant toute autre écriture, et attribuer un journal à la variable;
   et consiste soit à fournir un pointeur, désignant une zone de mémoire contenant la valeur courante de la variable, à la tâche qui a demandé ladite opération de lecture ; soit à foumir une nouvelle valeur pour chaque variable à écrire, puis copier la nouvelle valeur dans ledit journal, puis relâcher le verrou d'écriture non avortable, et enfin relâcher ledit hold ;
- **dans le cadre d'une transaction,**
   - une opération de lecture consiste, pour chaque variable à lire :
      - - s'il n'y pas de journal attribué à la variable pour cette transaction :
         - - - s'il y a un hold attribué à la variable, attendre le relâchement de ce hold,
         - - - s'il n'y a pas, ou plus, de hold attribué à la variable, attribuer un hold à la variable pour la durée nécessaire à la lecture de la variable ;
            - - - - s'il n'y a pas de verrou d'écriture non avortable attribué à la variable, attribuer un verrou de lecture avortable à la variable ; ce verrou de lecture avortable interdisant toute écriture hors d'une transaction, si la tâche lectrice a une priorité vis-à-vis de toute tâche écrivain, et ce verrou de lecture avortable étant relâché dans le cas contraire ;
            - - - - s'il y a un verrou d'écriture attribué à la variable, relâcher le hold et attendre le relâchement du verrou d'écriture non avortable, et ensuite refaire les opérations précédentes ;
et consiste soit à fournir, à la tâche qui a demandé ladite opération de lecture, un pointeur pour chaque variable à lire, ce pointeur désignant le journal contenant la valeur de cette variable ;
soit consiste à fournir la valeur de la variable et la copier, d'une manière atomique, dans une zone de mémoire qui appartient à un processus qui a demandé ladite opération de lecture; et ensuite relâcher le hold;
- - s'il y a un journal attribué à la variable pour cette transaction :
   - - - s'il y a un hold attribué à la variable, attendre le relâchement de ce hold,
   - - - s'il n'y a pas, ou plus, de hold attribué à la variable, attribuer un hold à la variable pour la durée nécessaire à la lecture de cette variable;
et consiste soit à fournir, à la tâche qui a demandé ladite opération de lecture, un pointeur pour la variable à lire, ce pointeur désignant une zone de mémoire contenant la valeur de cette variable;
soit consiste à fournir une valeur lue dans le journal et à la copier, de manière atomique, dans une zone de mémoire qui appartient à un processus qui à demandé l'opération de lecture; et ensuite relâcher le hold ;
- une opération **d'écriture** consiste, pour chaque variable à écrire :
   - - s'il n'y a pas de journal pour cette transaction,
      - - - s'il y a un hold attribué à la valeur de cette variable, attendre le relâchement de ce hold ;
      - - - s'il n'y a pas, ou plus, de hold. attribué à la valeur courante de la variable, attribuer un hold à la valeur courante de la variable pour la durée nécessaire à l'écriture d'une nouvelle valeur; et ensuite :
         - - - - s'il y a un verrou en écriture, relâcher le hold, attendre le relâchement du verrou en écriture, puis attribuer un nouveau hold ;
         - - - - s'il n'y a pas, ou plus, de verrou en écriture, attribuer un verrou en écriture avortable interdisant toute autre écriture, ce verrou étant relâché si la transaction est avortée ou s'il y a un conflit avec une autre transaction ; et attribuer un journal à la variable, puis attribuer un hold à ce journal ; écrire la valeur courante de la variable dans ce journal ; et relâcher ce premier hold précédemment attribué à la valeur courante de la variable ;
et consiste soit à fournir un pointeur pour chaque variable à écrire, ce pointeur désignant ce joumal; soit copier la nouvelle valeur dans le journal, et ensuite relâcher le hold ;
- - si un joumal existe pour cette transaction,
   - - - et s'il y a un hold attribué au journal contenant la nouvelle valeur de la variable, attendre le relâchement de ce hold ;
   - - - s'il n'y a pas, ou plus, de hold attribué au journal contenant la nouvelle valeur de la variable, attribuer un hold à ce journal ;
et consiste ensuite soit à fournir un pointeur désignant ce journal ; soit à fournir une nouvelle valeur pour chaque variable à écrire, et copier la nouvelle valeur dans ce journal, puis relâcher le hold.

Le procédé ainsi caractérisé procure, en moyenne, une plus grande rapidité d'accès aux données parce qu'il permet d'accéder à une variable au moyen d'un pointeur, tout en permettant de gérer la concurrence si cette variable peut intéresser plusieurs tâches. En effet, les règles énoncées ci-dessus résolvent le conflit existant lorsque deux tâches différentes demandent respectivement un accès en lecture et un accès en écriture, ou deux accès en écriture, pour une même variable.

Le procédé ainsi caractérisé a pour avantage d'assurer l'atomicité d'un accès : soit grâce à un hold s'il s'agit d'un accès par pointeur ; soit grâce à un verrou de lecture ou un verrou d'écriture, s'il s'agit d'un accès par valeur.

Le procédé ainsi caractérisé garantit donc les quatre propriétés souhaitées pour les transactions (Atomicité, cohérence, isolation, et durabilité) parce que le hold assure l'atomicité, les verrous assurent la cohérence, le log assure l'isolation, et le protocole de validation de la modification de chaque valeur assure la durabilité.

L'invention sera mieux comprise et d'autre détails apparaîtrons à l'aide de la description ci-dessous d'un exemple de gestionnaire de données, selon l'invention, et des figures l'accompagnant :
- La figure 1 représente un organigramme des opérations pour une lecture hors transaction ;
- La figure 2 représente un organigramme des opérations pour une lecture dans le cadre d'une transaction ;
- La figure 3 représente un organigramme des opérations pour une écriture hors transaction ;
- et la figure 4 représente un organigramme des opérations pour une écriture dans le cadre d'une transaction.

Le tableau ci-dessous récapitule les règles applicables, selon l'invention, en cas de concurrence entre deux transactions ; un premier verrou ayant déjà été attribué à une première transaction, un second verrou étant sur le point d'être attribué à une seconde transaction, pour une même variable ; et le tableau indiquant si l'attribution du second verrou est possible (OUI) ou bien est refusée (NON).

**PREMIER TABLEAU**

| POSSIBILITE D'ATTRIBUER LE SECOND VERROU | | PREMIER VERROU | | | |
|---|---|---|---|---|---|
| | | Verrou de lecture avortable | Verrou de lecture non avortable | Verrou d'écriture avortable | Verrou d'écriture non avortable |
| SECOND VERROU | Verrou de lecture avortable | OUI | OUI | OUI | **NON** |
| | Verrou de lecture non avortable | OUI | OUI | OUI | **NON** |
| | Verrou d'écriture avortable | OUI | OUI | **NON** | **NON** |
| | Verrou d'écriture non avortable | **NON** | **NON** | **NON** | **NON** |

Lors de la fermeture d'une transaction, les conflits entre un premier verrou attribué à une première transaction, et un second verrou attribué à une seconde transaction, sont résolus en fonction des priorités respectives de ces deux transactions, ces priorités étant prédéterminées pour chaque variable. On distingue deux modes de mise en oeuvre du procédé, selon la règle que l'on fixe pour le cas où il y a transformation d'un verrou d'écriture avortable en verrou d'écriture non avortable.

Le tableau suivant récapitule les possibilités de transformation du second verrou selon un exemple de mise en oeuvre du procédé selon l'invention.

**SECOND TABLEAU**

| POSSIBILITE DE TRANSFORMER LE SECOND VERROU | | Verrou de lecture avortable | Verrou de lecture non avortable | Verrou d'écriture avortable |
|---|---|---|---|---|
| SECOND VERROU | Verrou de lecture avortable → non avortable | OUI | OUI | OUI |
| | Verrou d'écriture avortable → non avortable | Si priorité à l'écrivain : avorter premier verrou et sa transaction. - Si priorité au lecteur: Transformation impossible. | Quelle que soit la priorité : Transformation impossible | Cas impossible |

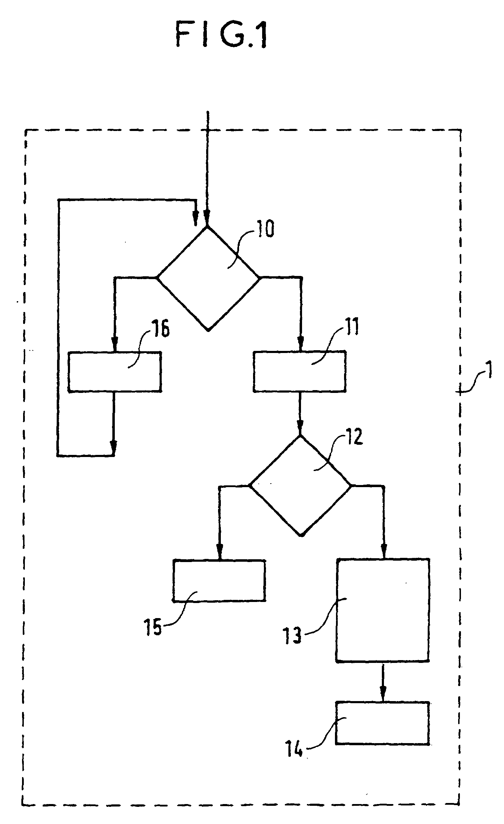

Les figures 1 à 4 illustrent le fonctionnement d'un gestionnaire de données qui correspond à cet exemple de mise en oeuvre du procédé selon l'invention.

La **figure 1** représente la suite d'opérations 1 réalisée par ce gestionnaire de données pour une lecture hors **transaction.** La **lecture** d'une variable, par valeur ou par pointeur, est faite hors transaction dans le cas où la tâche qui demande cette lecture ne demande pas d'autres accès dans la même requête.

Tout d'abord, le gestionnaire de données fait une opération 10 qui consiste à tester l'existence éventuelle d'un hold attribué à une tâche, pour cette variable :
- s'il existe un hold, une opération 16 consiste à attendre le relâchement du hold attribué à cette variable ;
- s'il n'existe pas, ou plus, de hold attribué à cette variable, une opération 11 consiste à attribuer un hold à cette variable ; ce hold ayant pour effet d'interdire tout accès aux autres tâches, il garantie que la donnée ne sera pas modifiée par une autre tâche puis une opération 12 consiste à tester s'il s'agit d'une lecture par pointeur :
   - - s'il s'agit d'une lecture par pointeur, une opération 15 consiste à fournir un pointeur désignant un emplacement mémoire contenant la valeur courante de la variable, à la tâche qui a demandé cette opération de lecture;
   - - s'il ne s'agit pas d'une lecture par pointeur, mais d'une lecture par **valeur**, une opération 13 consiste à copier la valeur courante de la variable, d'une manière atomique, dans un emplacement mémoire qui est propre à la tâche qui a demandé la lecture ; et enfin une opération 14 consiste à relâcher le hold attribué par l'opération 11.

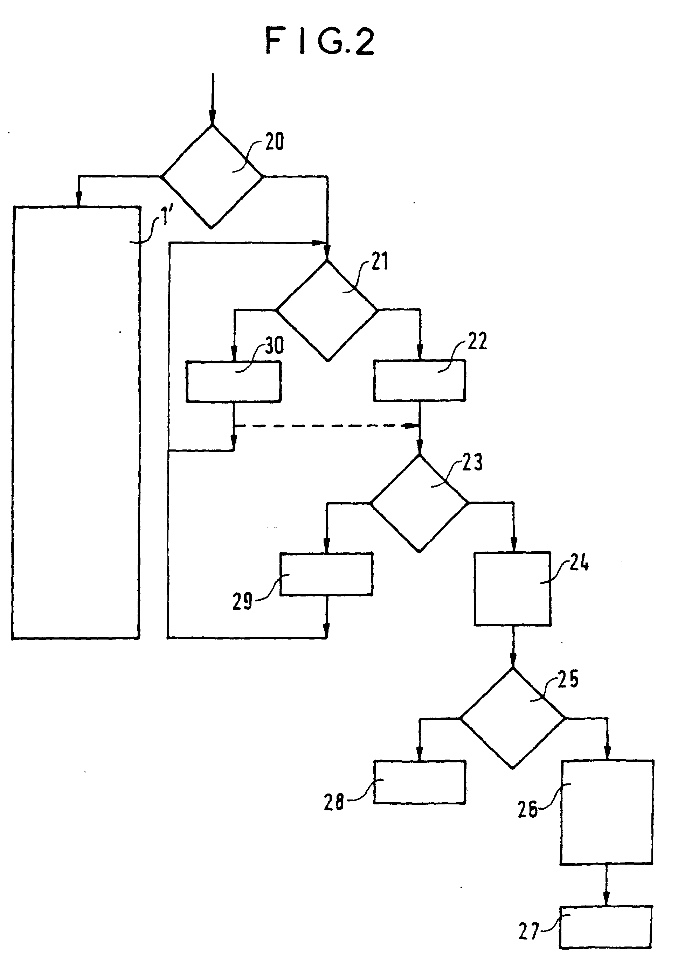

La **figure 2** représente l'organigramme des opérations réalisées par ce gestionnaire de données pour une lecture dans le cadre **d'une transaction**. La lecture d'une variable, par valeur ou par pointeur, est faite dans le cadre d'une transaction si la tâche qui demande cette lecture demande d'autres accès dans la même requête.

Une opération 20 consiste tout d'abord à tester l'existence éventuelle d'un journal, attribué à cette variable, pour stocker provisoirement une nouvelle valeur de cette variable :
- s'il existe un tel journal, le gestionnaire de données fait une suite d'opérations 1' qui est identique à la suite d'opérations 1 qui a été décrite en se référant à la figure 1, pour la lecture hors transaction ;
- s'il n'existe pas de journal attribué à la variable, une opération 21 consiste à tester l'existence d'un hold attribué à la valeur courante de cette variable :
   -- s'il y a un hold attribué à la valeur courante de cette variable, une opération 30 consiste à attendre le relâchement de ce hold ;
   -- s'il n'y a pas, ou plus, de hold attribué à la valeur courante de cette variable, une opération 22 consiste à attribuer un hold à la valeur courante de cette variable, pour la durée nécessaire à la lecture de la variable ; ce hold ayant pour effet d'interdire tout accès aux autres tâches, il garantie l'atomicité de l'opération ; puis une opération 23 consiste à tester l'existence d'un verrou d'écriture, non avortable, attribué à la valeur courante de la variable :
      --- s'il y a un verrou d'écriture, non avortable, attribué à la valeur courante de la variable, une opération 29 consiste à relâcher le hold et attendre le relâchement du verrou d'écriture, non avortable, car la pose d'un verrou en lecture n'est pas compatible avec l'existence d'un verrou d'écriture, non avortable (Voir le premier tableau, colonne de gauche) ; puis à recommencer les opérations 21, 22, 23, et éventuellement 30 ;
      --- s'il n'y a pas de verrou d'écriture, non avortable, il peut y avoir néanmoins un verrou d'écriture avortable, et une opération 24 consiste à attribuer un verrou de lecture, avortable, à la valeur courante de la variable, à condition que la tâche qui a demandé cette lecture soit prioritaire par rapport aux éventuelles tâches écrivains concurrentes (Comme l'indique le premier tableau, l'attribution d'un verrou de lecture, avortable ou non, est possible quand il existe déjà un verrou d'écriture avortable).; et une opération 25 consiste à déterminer si c'est une lecture par pointeur ou si c'est une lecture par valeur :
         ---- si c'est une lecture par **pointeur**, une opération 28 consiste à fournir un pointeur pour la variable à lire, ce pointeur désignant un emplacement mémoire contenant la valeur courante de cette variable, à la tâche qui a demandé cette opération de lecture ;
         ---- et si c'est une lecture par **valeur**, une opération 26 consiste à fournir la valeur courante de la variable, et la copier d'une manière atomique dans un emplacement mémoire propre à la tâche qui a demandé l'opération de lecture ; et enfin relâcher le hold.

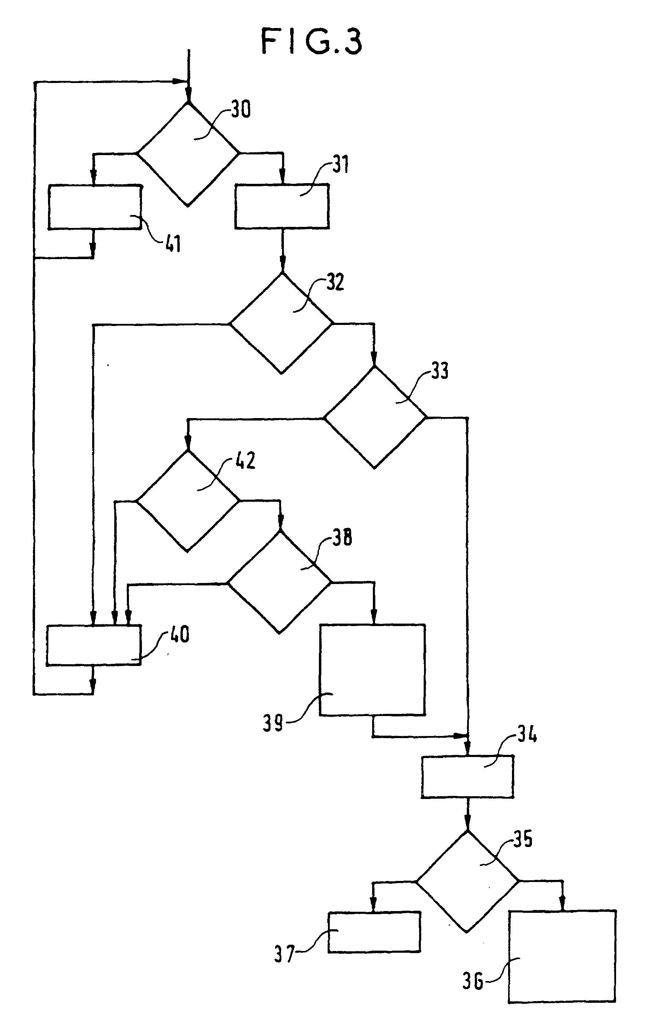

La **figure 3** représente les opérations réalisées par le gestionnaire de données pour une opération d'**écriture hors transaction** . L**'écriture** d'une variable, par valeur ou par pointeur, est faite **hors transaction** dans le cas où la tâche qui demande cette écriture ne demande pas d'autres accès dans la même requête.

Une opération 30 consiste tout d'abord à tester s'il existe un hold attribué à la variable :
- s'il y a un hold, une opération 41 consiste à attendre le relâchement de ce hold, puis à recommencer l'opération 30 ;
- s'il n'y a pas, ou plus, de hold, une opération 31 consiste alors à attribuer un hold à cette variable ; puis une opération 32 consiste à déterminer s'il existe un verrou d'écriture (avortable ou non avortable) attribué à cette variable ;
   -- s'il y a un verrou d'écriture, une opération 40 consiste à relâcher le hold attribué par l'opération 31, puis attendre le relâchement du verrou d'écriture, en réitérant les opérations 30, 31, 32, et éventuellement 41 ;
   -- s'il n'y a pas, ou plus de verrou d'écriture, une opération 33 consiste à déterminer s'il y a un verrou de lecture (avortable ou non avortable) :
      --- s'il n'y a pas de verrou de lecture, une opération 34 consiste à attribuer à cette variable un verrou d'écriture, non avortable, qui interdit toute écriture ou lecture par d'autres ; puis une opération 35 consiste à déterminer si c'est une écriture par valeur, ou une écriture par pointeur :
         ---- si c'est une écriture par **valeur**, une suite d'opérations 36 consiste à copier la nouvelle valeur, qui est dans un emplacement mémoire appartenant à la tâche qui a demandé l'opération d'écriture, vers l'emplacement mémoire attribué à la variable, puis relâcher le verrou d'écriture, puis relâcher le hold ;
         ---- si c'est une écriture par **pointeur**, une opération 37 consiste à fournir un pointeur, désignant une zone mémoire contenant la valeur courante de la variable, à la tâche qui a demandé l'opération d'écriture, cette dernière pouvant alors inscrire une nouvelle valeur dans cet emplacement ;
      --- s'il y a au moins un verrou de lecture, une opération 42 teste si c'est un verrou avortable ou non :
         ---- si c'est un verrou de lecture avortable, c'est à dire s'il y a au moins une tâche lectrice concurrente, une opération 38 consiste à déterminer si au moins une tâche lectrice concurrente est prioritaire par rapport à toute autre tâche qui est écrivain ( pour appliquer les règles situées sur la dernière ligne du second tableau) :
            ----- si au moins une tâche lectrice concurrente est prioritaire par rapport à toute tâche écrivain, l'opération 40 est effectuée (Retrait du hold et attente du relâchement du verrou de lecture) ;
            ----- si aucune tâche lectrice concurrente n'est prioritaire, une suite d'opérations 39 consiste à relâcher chaque verrou de lecture avortable attribué à une tâche concurrente, et à avorter la transaction à laquelle ce verrou de lecture appartient (Conformément au second tableau) ; puis l'opération 34 est effectuée (Pose d'un verrou d'écriture, non avortable) ;
         ---- si c'est un verrou de lecture non avortable, l'opération 40 est effectuée.

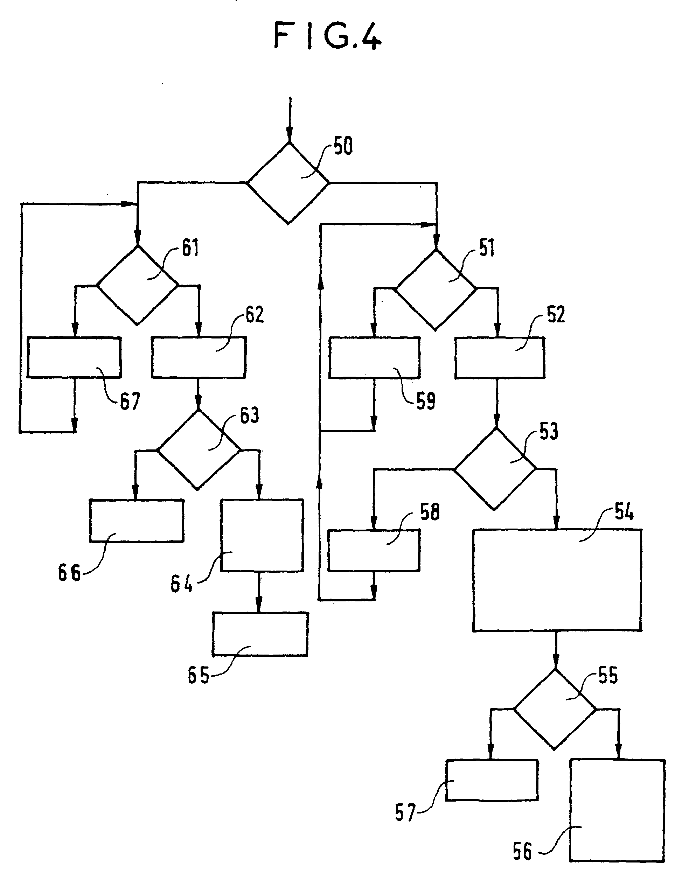

La **figure 4** représente un organigramme des opérations réalisées par le gestionnaire de données pour une écriture dans le cadre d'une transaction. L'écriture d'une variable, par valeur ou par pointeur, est faite dans le cadre d'une transaction si la tâche qui demande cette écriture demande d'autres accès dans la même requête.

Une première opération 50 consiste à déterminer s'il existe un journal attribué à la variable considérée, pour la transaction écrivain considérée :
- s'il n'existe pas un tel journal, une opération 51 consiste à déterminer s'il existe un hold attribué à la valeur courante de la variable :
   -- s'il n'existe pas, ou plus, de hold, une opération 52 consiste à attribuer un hold à la valeur courante de la variable ; ce hold ayant pour effet de rendre atomique l'opération ; puis à réaliser une opération 53 consistant à déterminer s'il existe un verrou d'écriture attribué à la variable :
      --- s'il n'existe pas de verrou d'écriture, une suite d'opérations 54 consiste à attribuer un verrou en écriture, avortable (si la transaction considérée est en concurrence avec une autre transaction), à la valeur courante de la variable, pour la transaction considérée (Les règles du premier tableau le permettent) ; puis attribuer un journal à cette valeur courante ; attribuer un hold à ce journal, ce hold ayant pour effet de rendre atomique la copie de la valeur courante de la variable dans ce journal puis copier la valeur courante de la variable dans ce journal puis relâcher le hold attribué à cette valeur courante ; et enfin une opération 55 détermine s'il s'agit d'une opération d'écriture par pointeur ou par valeur:
         ---- s'il s'agit d'une opération d'écriture par valeur, une suite d'opérations 56 consiste à copier la nouvelle valeur de la variable dans le journal, puis à relâcher le hold attribué au journal ;
         ---- si c'est une opération d'écriture par pointeur, une opération 57 consiste à fournir, à la tâche écrivain un pointeur désignant ce journal, ce pointeur lui permettant d'écrire une nouvelle valeur dans ce journal ; puis cette nouvelle valeur sera transférée dans l'emplacement mémoire de la valeur courante quand la transaction sera validée ;
   -- s'il existe déjà un verrou d'écriture (avortable ou non avortable) attribué à la valeur courante de la variable, une opération 58 consiste à relâcher le hold et à attendre le relâchement du verrou d'écriture, puis à recommencer l'opération 51 ;
- si l'opération 51 détermine qu'il existe un hold attribué à la valeur courante de la variable, une opération 59 consiste à attendre le retrait de ce hold, en recommençant l'opération 51 ;
- si l'opération 50 détermine qu'il existe un joumal attribué à la variable pour la transaction considérée, une opération 61 consiste à déterminer l'existence éventuelle d'un hold attribué à ce journal :
   -- s'il existe un hold attribué à ce journal, une opération 67 consiste à attendre le retrait du hold en réitérant l'opération 61 ;
   -- s'il n'existe pas de hold attribué à ce journal, une opération 62 consiste à attribuer un hold à ce joumal, ce hold ayant pour effet d'interdire tout accès à ce journal ; puis une opération 63 consiste à déterminer s'il s'agit d'une écriture par pointeur ou par valeur:
      --- s'il s'agit d'une opération d'écriture par valeur, une suite d'opérations 64 consiste à fournir une nouvelle valeur pour la variable, et à copier cette nouvelle valeur dans le journal, puis à relâcher le hold ;
      --- s'il s'agit d'une opération d'écriture par pointeur, une opération 66 consiste à fournir à la tâche écrivain un pointeur désignant le journal pour qu'elle y écrive une nouvelle valeur.

## Revendications

1. Procédé de gestion de données dans une mémoire partagée, des données contenues dans cette mémoire étant partagées par différents processus concurrents, chaque processus étant généralement constitué de plusieurs tâches concurrentes ; **caractérisé en ce que**,
• **hors d'une transaction,**
- une opération de lecture consiste, pour chaque variable à lire, à : attribuer (11) un verrou appelé hold à la variable à lire, ce hold interdisant tout accès à la dite variable, s'il n'y a pas déjà un hold attribué à la dite variable ; ou attribuer un nouveau hold à la dite variable, après avoir attendu le relâchement du précédent hold, si un précédent hold avait été attribué à la dite variable ;
et consiste soit à fournir (15) un pointeur, désignant une zone de la mémoire contenant la valeur courante de la dite variable, au processus qui a demandé la dite opération de lecture ; soit (13) à fournir la valeur courante de la variable et à la copier, de manière atomique, dans un emplacement mémoire qui appartient à la tâche ayant demandé la dite opération de lecture ; et ensuite relâcher le hold ;
- une opération d'écriture consiste, pour chaque variable à écrire, à :
-- s'il y a un hold attribué à la valeur courante de la variable, attendre (41) le relâchement du hold ;
-- s'il n'y a pas, ou plus, de hold attribué à la variable, attribuer (31) un hold à la variable pour la durée nécessaire à l'écriture de la variable, et :
--- s'il y a un verrou d'écriture, relâcher (40) le hold, attendre le relâchement du verrou d'écriture, et ensuite attribuer un nouveau hold à la variable ;
--- s'il n'y a pas, ou plus de verrou en écriture, et :
---- s'il y a un verrou en lecture, attendre (40) son relâchement si la tâche qui a demandé ladite opération de lecture a une priorité vis-à-vis de toute tâche écrivain, ou bien relâcher (39) le verrou de lecture et avorter la transaction auquel il appartient dans le cas contraire ;
---- s'il n'y a pas, ou plus, de verrou en lecture, attribuer (34) un verrou en écriture non avortable interdisant toute autre écriture, et attribuer un journal à la variable;
et consiste soit à fournir (37) un pointeur, désignant une zone de mémoire contenant la valeur courante de la variable, à la tâche qui a demandé ladite opération de lecture ; soit à fournir (36) une nouvelle valeur pour chaque variable à écrire, puis copier la nouvelle valeur dans ledit joumal, puis relâcher le verrou d'écriture non avortable, et enfin relâcher ledit hold ;
• **dans le cadre d'une transaction,**
- une opération de lecture consiste, pour chaque variable à lire :
- - s'il n'y pas de journal attribué à la variable pour cette transaction :
- - - s'il y a un hold attribué à la variable, attendre (30) le relâchement de ce hold,
- - - s'il n'y a pas, ou plus, de hold attribué à la variable, attribuer (22) un hold à la variable pour la durée nécessaire à la lecture de la variable ;
- - - - s'il n'y a pas de verrou d'écriture non avortable attribué à la variable, attribuer (24) un verrou de lecture avortable à la variable ; ce verrou de lecture avortable interdisant toute écriture hors d'une transaction, si la tâche lectrice a une priorité vis-à-vis de toute tâche écrivain, et ce verrou de lecture avortable étant relâché dans le cas contraire ;
- - - - s'il y a un verrou d'écriture attribué à la variable, relâcher (29) le hold et attendre le relâchement du verrou d'écriture non avortable, et ensuite refaire les opérations précédentes (21, 22, 23, 30) ;
et consiste soit à fournir (28), à la tâche qui a demandé ladite opération de lecture, un pointeur pour chaque variable à lire, ce pointeur désignant le journal contenant la valeur de cette variable ;
soit consiste à fournir (26) la valeur de la variable et la copier, d'une manière atomique, dans une zone de mémoire qui appartient à un processus qui a demandé ladite opération de lecture; et ensuite relâcher (27) le hold;
- - s'il y a un journal attribué à la variable pour cette transaction :
- - - s'il y a un hold attribué à la variable, attendre (16) le . relâchement de ce hold,
- - - s'il n'y a pas, ou plus, de hold attribué à la variable, attribuer (11) un hold à la variable pour la durée nécessaire à la lecture de cette variable;
et consiste soit à fournir (15), à la tâche qui a demandé ladite opération de lecture, un pointeur pour la variable à lire, ce pointeur désignant une zone de mémoire contenant la valeur de cette variable;
soit consiste à fournir (13) une valeur lue dans le journal et à la copier, de manière atomique, dans une zone de mémoire qui appartient à un processus qui à demandé l'opération de lecture; et ensuite relâcher (14) le hold ;
- une opération **d'écriture** consiste, pour chaque variable à écrire :
- - s'il n'y a pas de joumal pour cette transaction,
- - - s'il y a un hold attribué à la valeur de cette variable, attendre (59) le relâchement de ce hold ;
- - - s'il n'y a pas, ou plus, de hold attribué à la valeur courante de la variable, attribuer (52) un hold à la valeur courante de la variable pour la durée nécessaire à l'écriture d'une nouvelle valeur; et ensuite :
- - - - s'il y a un verrou en écriture, relâcher (58) le hold, attendre le relâchement du verrou en écriture, puis attribuer (52) un nouveau hold ;
- - - - s'il n'y a pas, ou plus, de verrou en écriture, attribuer (54) un verrou en écriture avortable interdisant toute autre écriture, ce verrou étant relâché si la transaction est avortée ou s'il y a un conflit avec une autre transaction ; et attribuer (54) un journal à la variable, puis attribuer (54) un hold à ce journal écrire (54) la valeur courante de la variable dans ce journal et relâcher (54) ce premier hold précédemment attribué à la valeur courante de la variable ;
et consiste soit à fournir (57) un pointeur pour chaque variable à écrire, ce pointeur désignant ce journal; soit copier (56) la nouvelle valeur dans le journal, et ensuite relâcher le hold ;
- - si un journal existe pour cette transaction,
- - - et s'il y a un hold attribué au journal contenant la nouvelle valeur de la variable, attendre (67) le relâchement de ce hold ;
- - - s'il n'y a pas, ou plus, de hold attribué au journal contenant la nouvelle valeur de la variable, attribuer (62) un hold à ce journal ;
et consiste ensuite soit à fournir (66) un pointeur désignant ce journal ; soit à fournir (67) une nouvelle valeur pour chaque variable à écrire, et copier la nouvelle valeur dans ce joumal, puis relâcher (65) le hold.

## Claims

1. A method of managing data in a shared memory, data contained in the memory being shared by various competing processes, each process generally being constituted by a plurality of competing tasks; said method being **characterized in that**:
· not within a transaction,
- for each variable to be read, a read operation consists in: allocating (11) a lock referred to as a "hold" to the variable to be read, which hold prevents any access to said variable, if there is not already a hold allocated to said variable; or in allocating a new hold to said variable, after waiting for the preceding hold to be released, if a preceding hold was allocated to said variable; and consists either in supplying (15) a pointer designating a memory zone containing the current value of said variable to the process that requested said read operation; or else in supplying (13) the current value of the variable and in copying it in atomic manner into a memory location that belongs to the task that requested said read operation; and then in releasing the hold; and
- for each variable to be written, a write operation consists in the following steps:
-- if there is a hold allocated to the current value of the variable, waiting (41) for the hold to be released; and
-- if there is not or is no longer a hold allocated to the variable, allocating (31) a hold to the variable for the time required to write the variable, and:
--- if there is a write lock, releasing (40) the hold, waiting for the write lock to be released, and then allocating a new hold to the variable; and
--- if there is not or is no longer a write lock, and:
---- if there is a read lock, waiting (40) for it to be released if the task that requested said read operation has priority over any writer task, or, otherwise, releasing (39) the read lock and aborting the transaction to which it belongs; and
---- if there is not or is no longer a read lock, allocating (34) a non-abortable write lock preventing any other writing, and allocating a log to the variable; and
consists either in supplying (37) a pointer designating a memory zone containing the current value of the variable to the task that requested said read operation; or else in supplying (36) a new value for each variable to write, then in copying the new value into said log, then in releasing the non-abortable write lock, and finally in releasing said hold; and
· within a transaction,
- for each variable to be read, a read operation consists in performing the following steps:
-- if there is no log allocated to the variable for the transaction:
- - - if there is a hold allocated to the variable, waiting (30) for the hold to be released; and
- - - if there is not or is no longer a hold allocated to the variable, allocating (22) a hold to the variable for the time required to read the variable;
---- if there is no non-abortable write lock allocated to the variable, allocating (24) an abortable read lock to the variable; this abortable read lock preventing any writing not within a transaction, if the reader task has priority over any writer task, and said abortable read lock being released otherwise; and
---- if there is a write lock allocated to the variable, releasing (29) the hold and waiting for the non-abortable write lock to be released, and then repeating the preceding operations (21, 22, 23, 30); and
consists either in supplying (28) a pointer for each variable to be read to the task that requested said read operation, which pointer designates the log containing the value of the variable; or in supplying (26) the value of the variable and in copying it in atomic manner into a memory zone that belongs to a process that requested said read operation; and then releasing (27) the hold;
-- if there is a log allocated to the variable for this transaction:
--- if there is a hold allocated to the variable, waiting (16) for the hold to be released; and
--- if there is not or is no longer a hold allocated to the variable, allocating (11) a hold to the variable for the time required to read said variable; and
consists either in supplying (15) a pointer for the variable to be read to the task that requested said read operation, which pointer designates a memory zone containing the value of said variable; or in supplying (13) a value read from the log and in copying it in atomic manner into a memory zone that belongs to a process that requested the read operation; and then in releasing (14) the hold;
- for each variable to write, a write operation consists in the following steps:
-- if there is no log for this transaction:
--- if there is a hold allocated to the value of said variable, waiting (59) for the hold to be released; and
--- if there is not or is no longer a hold allocated to the current value of the variable, allocating (52) a hold to the current value of the variable for the time required to write a new value, and then:
---- if there is a write lock, releasing (58) the hold, waiting for the write lock to be released, then allocating (52) a new hold;
---- if there is not or is no longer a write lock, allocating (54) an abortable write lock preventing any other writing, the lock being released if the transaction is aborted; and allocating (54) a log to the variable, then allocating (54) a hold to said log; writing (54) the current value of the variable in the log; and releasing (54) the first hold previously allocated to the current value of the variable; and
consists either in supplying (57) a pointer for each variable to be written, which pointer designates the log, or in copying (56) the new value into the log, and then in releasing the hold;
-- if a log exists for this transaction:
--- if there is a hold allocated to the log containing the new value of the variable, waiting (67) for the hold to be released; and
--- if there is not or is no longer a hold allocated to the log containing the new value of the variable, allocating (62) a hold to said log; and
consists then either in supplying (66) a pointer designating the log; or in supplying (67) a new value for each variable to be written, and in copying the new value into the log, then in releasing (65) the hold.

## Patentansprüche

1. Verfahren zur Verwaltung von Daten in einem geteilten Speicher, wobei die in diesem Speicher enthaltenen Daten von verschiedenen konkurrierenden Prozessen geteilt werden und jeder Prozeß im allgemeinen aus mehreren konkurrierenden Aufgaben besteht, **dadurch gekennzeichnet, daß**
• **außerhalb einer Transaktion**
- eine **Lese**operation für jede zu lesende Variable darin besteht, der zu lesenden Variablen eine als "Hold" bezeichnete Sperre zuzuweisen (11), wobei dieser Hold jeden Zugriff auf besagte Variable blockiert, sofern besagter Variablen nicht schon ein Hold zugewiesen wurde, oder besagter Variablen einen neuen Hold zuzuweisen, nachdem die Freigabe des vorhergehenden Holds abgewartet wurde, sofern besagter Variablen ein Hold zugewiesen wurde;
und darin besteht, entweder an den Prozeß, der besagte Leseoperation angefordert hat, einen Zeiger zu übergeben (15), welcher einen den aktuellen Wert besagter Variablen enthaltenden Speicherbereich bezeichnet, oder den aktuellen Variablenwert zu liefern (13) und diesen auf atomistische Weise an einen Speicherplatz zu kopieren, welcher zu der Aufgabe gehört, von der besagte Leseoperation angefordert wurde, und anschließend den Hold freizugeben;
- ein **Schreib**vorgang für jede zu schreibende Variable darin besteht,
- wenn ein dem aktuellen Wert der Variablen zugewiesener Hold existiert, die Freigabe des Holds abzuwarten (41);
- wenn ein dem aktuellen Wert der Variablen zugewiesener Hold nicht oder nicht mehr existiert, der Variablen für die zum Schreiben der Variablen benötigte Zeitspanne einen Hold zuzuweisen (31) und
- wenn eine Schreibsperre existiert, den Hold freizugeben (40), die Freigabe der Schreibsperre abzuwarten und anschließend der Variablen einen neuen Hold zuzuweisen;
- wenn eine Schreibsperre nicht oder nicht mehr existiert und
- wenn eine Lesesperre existiert, deren Freigabe abzuwarten (40), wenn die Aufgabe, die besagte Leseoperation angefordert hat, Priorität gegenüber allen schreibenden Aufgaben besitzt, oder die Lesesperre freizugeben (39) und die Transaktion, zu welcher sie im gegenteiligen Fall gehört, vorzeitig aufzuheben;
- wenn eine Lesesperre nicht oder nicht mehr existiert, eine nicht aufhebbare Schreibsperre (34) zuzuweisen, die jeden anderen Schreibvorgang blockiert, und der Variablen eine Journal zuzuweisen;
und darin besteht, entweder an die Aufgabe, die besagte Leseoperation angefordert hat, einen Zeiger zu übergeben (37), der einen den aktuellen Wert der Variablen enthaltenden Speicherbereich bezeichnet, oder für jede zu schreibende Variable einen neuen Wert zu liefern (36), anschließend den neuen Wert in besagtes Journal zu schreiben, dann die nicht aufhebbare Schreibsperre freizugeben und schließlich besagten Hold freizugeben;
• **im Rahmen einer Transaktion**
eine Leseoperation für jede zu lesende Variable darin besteht,
- wenn für diese Transaktion kein der Variablen zugewiesener Hold existiert:
- wenn ein der Variablen zugewiesener Hold existiert, die Freigabe dieses Holds abzuwarten (30),
- wenn ein der Variablen zugewiesener Hold nicht oder nicht mehr existiert, der Variablen für die zum Lesen der Variablen notwendigen Zeitspanne einen Hold zuzuweisen (22);
- wenn keine der Variablen zugewiesene nicht aufhebbare Schreibsperre existiert, der Variablen eine aufhebbare Lesesperre zuzuweisen (24), die außerhalb der Transaktion jeden Schreibzugriff blockiert, wenn die lesende Aufgabe Priorität gegenüber allen schreibenden Aufgaben besitzt, und wobei diese aufhebbare Lesesperre im gegenteiligen Fall freigegeben wird;
- wenn eine der Variablen zugewiesene Schreibsperre existiert, den Hold freizugeben (29), die Freigabe der nicht aufhebbaren Schreibsperre abzuwarten und anschließend die vorgenannten Operationen (21, 22, 23, 30) erneut auszuführen;
und darin besteht, entweder an die Aufgabe, die besagte Leseoperation angefordert hat, einen Zeiger für jede zu lesende Variable zu übergeben (28), der das Journal bezeichnet, das den Wert dieser Variablen enthält; oder darin besteht, den Wert der Variablen zu liefern (26) und diesen in atomistischer Weise in einen Speicherbereich zu kopieren, der zu einem Prozeß gehört, der besagte Leseoperation angefordert hat, und anschließend den Hold freizugeben (27);
- wenn ein Journal existiert, das der Variablen für diese Transaktion zugewiesen ist:
- wenn ein der Variablen zugewiesener Hold existiert, die Freigabe dieses Holds abzuwarten (16),
- wenn ein der Variablen zugewiesener Hold nicht oder nicht mehr existiert, der Variablen für die zum Lesen dieser Variablen benötigte Zeitspanne einen Hold zuzuweisen (11);
und darin besteht, entweder an die Aufgabe, die besagte Leseoperation angefordert hat, einen Zeiger für die zu lesende Variable zu übergeben, der einen Speicherbereich bezeichnet, welcher den Wert dieser Variablen enthält; und entweder darin besteht, einen aus dem Journal gelesenen Wert zu liefern (13) und diesen in atomistischer Weise in einen Speicherbereich zu kopieren, der zu einem Prozeß gehört, welcher die Leseoperation angefordert hat, und anschließend den Hold freizugeben (14);
- eine **Schreib**operation für jede zu schreibende Variable darin besteht,
- wenn für diese Transaktion kein Journal existiert
- wenn ein dem Wert dieser Variablen zugewiesener Hold existiert, die Freigabe (59) dieses Holds abzuwarten;
- wenn ein dem aktuellen Wert der Variablen zugewiesener Hold nicht oder nicht mehr existiert, dem aktuellen Wert der Variablen für die zum Schreiben eines neuen Wertes benötigte Zeitspanne einen Hold zuzuweisen (52) und anschließend
- wenn eine Schreibsperre existiert, den Hold freizugeben (58), die Freigabe der Schreibsperre abzuwarten und anschließend einen neuen Hold zuzuweisen (52)
- wenn eine Schreibsperre nicht oder nicht mehr existiert, eine aufhebbare Schreibsperre zuzuweisen (54), die alle anderen Schreibvorgänge blockiert und freigegeben wird, wenn die Transaktion aufgehoben wird oder wenn es einen Konflikt mit einer anderen Transaktion gibt, und der Variablen ein Journal zuzuweisen (54), diesem Journal anschließend einen Hold zuzuweisen (54), den aktuellen Wert der Variablen in dieses Journal zu schreiben (54) und diesen zuvor dem aktuellen Wert der Variablen zugewiesenen Hold freizugeben;
und darin besteht, entweder für jede zu schreibende Variable einen Zeiger zu liefern (57), der dieses Journal bezeichnet, oder den neuen Wert in das Journal zu kopieren (56) und anschließend den Hold freizugeben;
- wenn für diese Transaktion ein Journal existiert,
- und wenn ein Hold existiert, der dem Journal zugewiesen ist, das den neuen Wert der Variablen enthält, die Freigabe dieses Holds abzuwarten (67)
- wenn ein Hold, der dem Journal zugewiesen ist, das den neuen Wert der Variablen enthält, nicht oder nicht mehr existiert, diesem Journal einen Hold zuzuweisen (62);
und anschließend darin besteht, entweder einen Zeiger zu liefern (66), der dieses Journal bezeichnet, oder einen neuen Wert für jede zu schreibende Variable zu liefern (67) und den neuen Wert in dieses Journal zu kopieren und anschließend den Hold freizugeben (65).
